# EUROPÄISCHE PATENTANMELDUNG

(11) **EP 1 191 779 A2**
(43) Veröffentlichungstag der Anmeldung: **27.03.2002**
(21) Anmeldenummer: 01120345.2
(22) Anmeldetag: 24.08.2001
(51) Int. Cl.: H04N 1/21

(54) **Vorrichtung und Verfahren zum Erzeugen von Bildern**

(30) Priorität: 20.09.2000 DE 10046665
(71) Anmelder: Agfa-Gevaert AG, 51373 Leverkusen (DE)
(72) Erfinder: Brunner, Jürgen, 81377 München (DE); Rauh, Hans-Jürgen, 82064 Strasslach-Hailafing (DE); Schindler, Hans-Georg, 83607 Holzkirchen (DE)

(57) **Zusammenfassung**

Es wird eine Vorrichtung (1) und ein Verfahren zum Erzeugen von Bildern vorgeschlagen. Dabei werden von Eingabemedien Bildinformationen mehrerer Bilder (A1 bis A6, AX, AY) gelesen und Bilddaten bestimmt, die diese gelesenen Bildinformationen enthalten. Die Eingabemedien sind dabei mehreren Bilderzeugungsaufträgen zugeordnet. Über ein Ausgabemittel (22, 26) werden Bildinformationen, die diesem Ausgabemittel (22, 26) übermittelt wurden, auf Aufzeichnungsmaterial ausgegeben. Erfindungsgemäß werden die Eingabemedien in einem Sortiermittel (9) auftragsweise nach wenigstens einem Kriterium sortiert. Mittels eines Steuermittels (21) kann daraufhin eine Reihenfolge zum Übermitteln der Bilddaten von Bildern an das Ausgabemittel (22, 26) in Abhängigkeit von dem zuvor erfolgten auftragsweisen Sortieren der gelesenen Eingabemedien bestimmt werden.

## Beschreibung

Die vorliegende Erfindung betrifft eine Vorrichtung und ein Verfahren zum Erzeugen von Bildern gemäß der Oberbegriffe der Ansprüche 1 bzw. 10.

Solche Vorrichtungen und Verfahren werden u. a. in Großlaborbetrieben eingesetzt, in denen fotografische Bilder hergestellt und erzeugt werden. Als Eingabemedien, die die Bildinformationen der Bilder enthalten, dienen fotografische Filme, die eine Vielzahl von Bildnegativen enthalten. Die bei dem Großlabor eingehenden Filme werden in Durchlaufmaschinen verarbeitet. Beispielsweise die Belichtung der in den Filmnegativen enthaltenen Bildinformationen auf fotografisches Aufzeichnungsmaterial, wie Fotopapier, erfolgt in fotografischen Printern, wie beispielsweise dem Agfa MSP und dem Agfa MSP DIMAX. Beide Printer sind Durchlaufmaschinen, in denen sowohl der Film als auch das Fotopapier bandförmig verarbeitet werden. Solche Durchlaufmaschinen bieten insbesondere eine hohe Qualität der erzeugten Bilder, einen geringen Chemieverbrauch und geringe Personalkosten.

Damit Filme in der Durchlaufmaschine verarbeitet werden können, muß ein Filmband hergestellt werden, in dem eine Vielzahl von Filmen zu einem Filmband vereinigt werden. Eine solche Vereinigung einzelner Filme zu dem endlosen Band erfolgt in einem sogenannten "Splicer". Das endlose Band von aneinandergefügten Einzelfilmen wird zu einer Filmrolle aufgerollt. Eine solche Rolle von fotografischem Film bezeichnet man üblicherweise als Batch. Ein solches Batch bleibt während des gesamten Verfahrens zum Erzeugen von fotografischen Bildern zusammen und wird erst in der Endverarbeitung wieder in die einzelnen Aufträge, d.h. in die einzelnen Filme, zerlegt. Bei der Endverarbeitung ist es sehr wichtig, daß alle Komponenten, die einem einzigen Auftrag zuzuordnen sind, richtig zusammengeordnet werden. Solche Komponenten eines einzelnen Auftrages sind beispielsweise die Auftragstasche, der Film, die hergestellten Bildabzüge und ein Indexprint.

Dem Kunden, d. h. dem Auftraggeber, ist es möglich, zwischen verschiedenen Alternativen bei dem Herstellen von Bildern zu wählen. Beispielsweise können die reproduzierten Bilder in unterschiedlichen Formaten hergestellt werden. Des weiteren stehen unterschiedliche Varianten von Papieren zur Verfügung, die insbesondere auch eine unterschiedliche Oberfläche (matt oder glänzend) haben können. Um die unterschiedlichen Wünsche der Kunden erfüllen zu können, müssen die Printer mit den verschiedenen Fotopapieren bestückt werden. Da die Konfiguration des Printers nicht ständig geändert werden soll, beispielsweise um Stillstandszeiten zu vermeiden, müssen die Filmbatches mit möglichst vielen Einzelfilmen für gleichartige Aufträge zusammengestellt werden. Gleichartig bezieht sich hier insbesondere auf die Art des zu verwendenden Fotopapiers.

Um Batches zusammenzustellen, wird in den Großlaborbetrieben üblicherweise eine Vorsortierung der eingehenden Filme nach den oben genannten Kriterien durchgeführt. Das Vorsortieren und das Zusammenstellen der einzelnen Filme zu einem Batch ist zwar sicher und zuverlässig, hat aber auch Nachteile. Beispielsweise hat man keinen Zugriff auf die einzelnen Aufträge, solange ein Batch nicht vollständig abgearbeitet ist. Üblicherweise werden von einem einzigen Fotohändler eine Vielzahl von unterschiedlichen Aufträgen an den Großlaborbetrieb geschickt, um entsprechend dieser Aufträge Bildabzüge herzustellen. Der Händler ist daran interessiert, alle Aufträge schnell zurückzubekommen. Es soll daher eine kurze Durchlaufzeit aller Aufträge eines Fotohändlers durch den Großlaborbetrieb ermöglicht werden. Dies ist allerdings problematisch, da die verschiedenen Aufträge des Fotohändlers wahrscheinlich mehreren unterschiedlichen Batches zugeordnet sind. Da nicht alle Batches gleichzeitig bearbeitet werden können, müssen einzelne Aufträge des Fotohändlers, die bereits abgearbeitet sind, warten, bis alle restlichen Aufträge des Fotohändlers fertig sind. Erst dann werden alle Aufträge gemeinsam an den Fotohändler zurückgeschickt oder -transportiert.

Vor einiger Zeit sind neue Strukturen für Großlaborbetriebe bekannt geworden. Eine solche Struktur wird beispielsweise in der europäischen Patentanmeldung EP 0 893 907 A1 beschrieben. Gemäß dieser Patentanmeldung können mehrere Lesemittel zum Lesen von Eingabemedien über einen sogenannten Bus mit mehreren Ausgabemitteln zum Ausgeben von Bildinformationen auf Aufzeichnungsmaterial verbunden werden. Die von den Lesemitteln erzeugten Bilddaten, die die gelesenen Bildinformationen enthalten, können aufgrund von auftragsspezifischen Begleitdaten, die zusammen mit den Eingabemedien dem bekannten System zum Herstellen von Bildern zugeführt werden, über den Bus an eines der Ausgabemittel weitergeleitet werden. Dazu ist an den Bus eine Steuereinrichtung angeschlossen, die den Datenfluß von den Lesemitteln zu den Ausgabemitteln auftragsorientiert nach Maßgabe der Begleitdaten steuert. Bei dem aus der EP 0 893 907 A1 bekannten System sollen unterschiedliche Kopieraufträge ohne vorbereitende Planung in beliebiger Reihenfolge abgewickelt werden können. Ein vorbereitendes Sortieren der Eingabemedien erfolgt nicht. Die von dem Lesemittel bestimmten Bilddaten werden ausschließlich in Abhängigkeit von den Begleitdaten an die verschiedenen Ausgabeeinrichtungen weitergeleitet. Das bekannte System enthält eine Sammeleinrichtung, mit der ein auftragsweises Ordnen durchgeführt werden soll. Dies bedeutet, daß ausschließlich am Ende, d. h. nachdem alle Bilder der jeweiligen Aufträge erzeugt und hergestellt wurden, eine Zuordnung der erzeugten Bilder zu den Eingabemedien und anderen Komponenten dieses Auftrages erfolgt. Bei dem bekannten System ist eine aufwendige Endverarbeitung notwendig. Insbesondere müssen für die verschiedenen Komponenten eines Auftrages bei der Endverarbeitung wahlfreie Speicher zur Verfügung stehen, auf die ein beliebiger Zugriff gewährleistet sein muß.

Der vorliegenden Erfindung liegt die Aufgabe zugrunde, eine Vorrichtung und ein Verfahren zum Erzeugen von Bildern anzugeben, so daß mehrere unterschiedliche Bilderzeugungsaufträge auf einfache und effektive Weise abgearbeitet werden können.

Diese Aufgabe wird gemäß der technischen Lehre des Anspruchs 1 oder des Anspruchs 10 gelöst.

Gemäß der vorliegenden Erfindung werden die von dem Lesemittel gelesenen Eingabemedien auftragsweise sortiert. Dieses Sortieren erfolgt nach wenigstens einem vorgegebenen Kriterium. Eingabemedien können beispielsweise fotografische Filme oder Filmstreifen, aber ebenfalls andere Speichermedien, wie beispielsweise Disketten, CD-ROMs oder Chipkarten sein, auf denen Bilddaten mit Bildinformationen abgespeichert sind. Kriterium zum Sortieren der Eingabemedien kann eine Priorität zum Erzeugen der Bilder, d. h. eine bestimmte Eilbedürftigkeit, oder auch die Art der zu erzeugenden Bilder, d. h. insbesondere die Art des Aufzeichnungsmaterials, sein. Erfindungsgemäß werden die von dem Lesemittel bestimmten Bilddaten mit den Bildinformationen der Bilder in Abhängigkeit von dem zuvor vorgenommenen auftragsweisen Sortieren der gelesenen Eingabemedien in eine bestimmte Reihenfolge gebracht. Anhand dieser Reihenfolge sollen dann die jeweiligen Bilddaten der Bilder an das Ausgabemittel zum Ausgeben von Bildinformationen auf Aufzeichnungsmaterial weitergegeben werden. Aufgrund der Erfindung ist es vorteilhafterweise nicht notwendig, bei der Endverarbeitung der Aufträge für das Zwischenspeichern der Eingabemedien komplizierte Speicher mit einem wahlfreien Zugriff auf die einzelnen Eingabemedien vorzusehen. Statt dessen werden auf einfache Weise die Bilddaten mit den Bildinformationen der Bilder einer bestimmten Reihenfolge zugeordnet, mit der sie an das Ausgabemittel weitergeleitet werden. Diese Reihenfolge, in der die Bildinformationen auf das Aufzeichnungsmaterial ausgegeben werden, ist an die Reihenfolge der Eingabemedien angepaßt. Die Endsortierung der einzelnen Bilderzeugungsaufträge, bei der die Eingabemedien den verschiedenen erzeugten Bildern zugeordnet werden müssen, kann somit einfach ausgestaltet sein. Ein aufwendiges Suchen und Zuordnen der einzelnen Eingabemedien zu den Bildern ist somit nicht notwendig.

In einer vorteilhaften Ausgestaltung der Erfindung können Speicher, die zum Speichern der auftragsweise sortierten verschiedenen Eingabemedien der Bilderzeugungsaufträge dienen, sogenannte FiFo(First-in-First-out)-Speicher sein. Bei dieser Art von Speicher werden die in den Speicher eingegebenen Eingabemedien entsprechend der eingegebenen Reihenfolge auch wieder aus dem Speicher ausgegeben. Ein in den Speicher zuerst eingegebenes Eingabemedium wird daher auch zuerst aus dem Speicher ausgegeben. Solche FiFo-Speicher sind relativ einfach und kostengünstig herstellbar. Des weiteren können in ihnen viele Eingabemedien verschiedener Bilderzeugungsaufträge auf relativ wenig Speicherplatz abgelegt werden.

In einer weiteren besonders vorteilhaften Ausgestaltung der Erfindung sind mehrere Speicher zum Speichern von Eingabemedien vorhanden. Dadurch läßt sich eine weitere Flexibilisierung bei der Erzeugung von Bildern für verschiedene Bilderzeugungsaufträge erreichen.

Solche mehreren Speicher zum Speichern von Eingabemedien können insbesondere dann vorteilhaft eingesetzt werden, wenn mittels ein und desselben Ausgabemittels zum Ausgeben von Bildinformationen Bilderzeugungsaufträge abgewickelt werden müssen, für die unterschiedliche Aufzeichnungsmaterialien benötigt werden. Solche unterschiedliche Aufzeichnungsmaterialien können beispielsweise unterschiedliches Format und/oder unterschiedliche Oberflächen (glänzend oder matt) haben. Die mehreren Speicher zum Speichern von Eingabemedien werden diesen unterschiedlichen Aufzeichnungsmaterialien zugeordnet. Das Sortiermittel sortiert die gelesenen Eingabemedien dann so, daß sie in denjenigen Speicher einsortiert werden, der demjenigen Aufzeichnungsmaterial zugeordnet ist, das für die Erledigung des Bilderzeugungsauftrags, dem das Eingabemedium entstammt, benötigt wird. Eine Veränderung der Konfiguration des Ausgabemittels, um ein bestimmtes Aufzeichnungsmaterial gegen ein anderes Aufzeichnungsmaterial auszutauschen, kann vorteilhafterweise dann erfolgen, wenn es aus Gründen des effektiven Produktionsablaufes beim Erzeugen von Bildern sinnvoll ist.

Es ist ebenso möglich, die mehreren Speicher zum Speichern von Eingabemedien zur Verkürzung der Durchlaufzeit für besonders eilige Aufträge zu nutzen. Dazu können die mehreren Speicher unterschiedliche Prioritäten für die Abarbeitung der Bilderzeugungsaufträge erhalten. Beispielsweise ist es möglich, einen Speicher zum Speichern von Eingabemedien als "Überholspeicher" vorzusehen, dessen Inhalt bevorzugt abgearbeitet wird. Auf diese Weise können insbesondere auch logistische Gründe für die Erledigung von Bilderzeugungsaufträgen berücksichtigt werden. Beispielsweise können Aufträge, die nach ihrer Fertigstellung einen langen Transportweg zum Auftraggeber zurück haben, mit einer höheren Priorität bearbeitet werden, als Aufträge, die einen nicht so weiten Weg zum jeweiligen Auftraggeber zurückzulegen haben. Auf diese Weise können weit entfernt ansässige Auftraggeber pünktlich mit fertigen Bilderzeugungsaufträgen bedient werden.

Vorteilhafterweise können mehrere der Speicher zum Speichern von Eingabemedien einem einzigen Ausgabemittel zugeordnet sein. Diese Zuordnung kann fest sein. Dadurch ist es möglich, den Transport der Eingabemedien und/oder der erzeugten Bilder zur Endverarbeitungsstation einfach auszugestalten. Es ist nicht notwendig z. B. aufwendige Weichen in die Transportwege einzubringen.

Weitere vorteilhafte Ausgestaltungen der Erfindung sind den abhängigen Ansprüchen zu entnehmen. Im folgenden werden die Erfindung und ihre Vorteile anhand von Ausführungsbeispielen und in Zeichnungen beschrieben.

Es zeigen:
- Fig. 1: ein erstes Ausführungsbeispiel eines erfindungsgemäßen Systems zum Erzeugen von Bildern,
- Fig. 2: ein zweites Ausführungsbeispiel eines erfindungsgemäßen Systems zum Erzeugen von Bildern,
- Fig. 3: eine schematische Darstellung eines Beispiels des Sortierens und Verteilens von Eingabemedien auf mehrere Speicher zum Speichern von Eingabemedien und die entsprechende Zuordnung und Abspeicherung der zugehörigen Bilddaten in einem Speicher zum Speichern von Bilddaten und
- Fig. 4: eine schematische Darstellung eines weiteren Beispiels einer Verteilung von Bilddaten zugeordneten Zugriffsreihenfolge auf die Bilddaten.

Im folgenden werden für gleiche oder gleichwirkende Elemente durchweg gleiche Bezugszeichen verwendet.

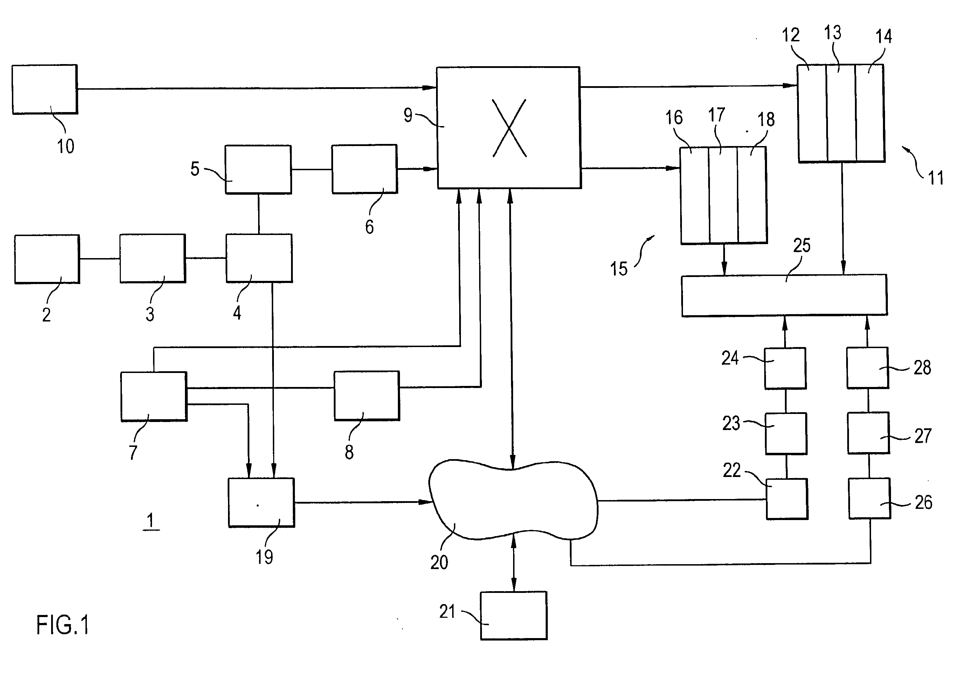

Figur 1 zeigt ein System 1 zum Erzeugen und Herstellen von Bildern. Das System 1 kann beispielsweise in einem Großlaborbetrieb eingesetzt werden, in dem von Bildinformationen, die auf verschiedenen Eingabemedien an den Großlaborbetrieb geliefert werden, Bilder auf Aufzeichnungsmaterial erzeugt werden. Solches Aufzeichnungsmaterial kann beispielsweise Fotopapier sein. Es ist aber ebenso möglich, andere Aufzeichnungsmaterialien, insbesondere Papier, das zur Aufnahme von Tinte geeignet ist, einzusetzen.

Die Bildinformationen der Bilder werden dem System 1 auf unterschiedlichen Eingabemedien zugeführt. Solche Eingabemedien können beispielsweise fotografischer Film oder auch andere elektronische Speichermedien, wie beispielsweise Chipkarten oder Disketten sein. Fotografische Filme werden zu sogenannten Batches zusammengefügt. Solche Batches enthalten eine Vielzahl von aufeinanderfolgenden einzelnen Filmen, die in Rollenform verarbeitet werden. Dazu enthält das System 1 einen sogenannten Splicer 2, in dem verschiedene fotografische Filme zu einem Batch miteinander verbunden werden. Dadurch entsteht ein langes Band von fotografischem Film. Solche Splicer zum Herstellen von fotografischen Filmbatches sind bekannt und werden daher nicht näher beschrieben. Dem Splicer 2 nachgeordnet ist ein Filmprozessor 3, der verschiedene Chemikalien enthält, die zum Entwickeln des Filmbandes dienen. In einem Filmscanner 4 werden die auf dem Filmband enthaltenen Bildinformationen der einzelnen Bilder gelesen und Bilddaten erzeugt, die diese Bildinformationen enthalten. Die prinzipielle Funktionsweise solcher Filmscanner ist ebenfalls bekannt und bedarf hier keiner weiteren Erklärung. Die von dem Scanner 4 gelesenen Filme werden anschließend an einen sogenannten Desplicer (nicht dargestellt) zum Auflösen der Filmbatches in die einzelnen Filme der Bilderzeugungsaufträge und an eine Schneidevorrichtung 5 weitergeleitet, die die einzelnen Filme in Filmstreifen schneidet. Die Filmstreifen werden dann an eine Verpackungsmaschine 6 weitergeleitet, in der Filmstreifen der jeweiligen Bilderzeugungsaufträge gemeinsam in Auftragstaschen verpackt werden. Jedem Bilderzeugungsauftrag ist daher eine eigene Auftragstasche zugeordnet.

Der Verpackungsmaschine 6 ist ein Verteilmittel 9 nachgeschaltet. Dieses Verteilmittel 9 ist mit mehreren Speichern verbunden, die zum Abspeichern der Eingabemedien dienen. Im vorliegenden Ausführungsbeispiel sind dem Verteilmittel 9 zwei Speicher 11 und 15 nachgeschaltet. Diese beiden Speicher 11 und 15 sind sogenannte FiFo-Speicher. Es ist aber ebenso möglich, die Speicher 11 und 15 auf andere Weise auszugestalten. Des weiteren sind die beiden Speicher 11 und 15 so ausgestaltet, daß sie unterschiedliche Arten von Eingabemedien aufnehmen können. Insbesondere können die in die Auftragstaschen verpackten Filmstreifen abgespeichert werden.

Das System 1 enthält neben dem Filmscanner 4 ein weiteres Lesemittel zum Lesen von Eingabemedien. Dieses weitere Lesemittel ist im vorliegenden Ausführungsbeispiel ein Speicherkartenleser 7. Diesem Speicherkartenleser 7 können Speicherkarten zugeführt werden, auf denen die Bilddaten der einzelnen Bilder abgespeichert sind. Speicherkartenleser 7 und Filmscanner 4 sind hier nur beispielhaft als Lesemittel zum Lesen von Eingabemedien aufgeführt. Selbstverständlich ist es ebenso möglich, zusätzliche oder andere Lesemittel vorzusehen. Nachdem die Speicherkarten von dem Speicherkartenleser 7 gelesen und die auf den Speicherkarten abgespeicherten Bilddaten erfaßt und bestimmt wurden, werden die Speicherkarten an eine dem Speicherkartenleser 7 nachgeschaltete Verpackungsmaschine 8 weitergeleitet, in der die Speicherkarten ebenfalls in Auftragstaschen verpackt werden. Anschließend werden die so verpackten Speicherkarten an das Verteilmittel 9 weitergegeben, das die verpackten Speicherkarten auf die beiden FiFo-Speicher 11 und 15 verteilt.

Das Verteilmittel 9 verteilt die Auftragstaschen mit den Filmstreifen oder den Speicherkarten nach bestimmten Kriterien auf die beiden Speicher 11 und 15. Solche Kriterien können beispielsweise anhand von Zusatzinformationen festgelegt werden, die den einzelnen Bilderzeugungsaufträgen entnommen werden können und beispielsweise über eine Eingabestation 10 dem System 1 zugeführt werden. Es ist ebenso möglich, daß solche Zusatzinformationen neben den Bilddaten der einzelnen Bilder auf den Speicherkarten abgespeichert sind, so daß sie mittels des Speicherkartenlesers 7 ermittelt werden können. Die so ermittelten Zusatzinformationen werden von der Eingabestation 10 oder dem Speicherkartenleser 7 direkt an das Verteilmittel 9 weitergeleitet, um das Verteilen der verschiedenen Auftragstaschen entsprechend zu steuern. Es ist ebenso möglich, ein Kriterium zum Verteilen der Eingabemedien den verschiedenen Eingabemedien bei Eingabe in das System 1 zuzuordnen. Beispielsweise kann jedem Eingabemedium, bei Eingabe in das System 1, eine bestimmte Bearbeitungspriorität zugeteilt werden. Diese Bearbeitungspriorität wird dann von dem Verteilmittel beim Verteilen auf die Speicher 11 und 15 berücksichtigt. Eine Zusatzinformation zur Berücksichtigung beim Verteilen auf die verschiedenen Speicher kann insbesondere auch die Art des Fotopapiers sein, mit dem die einzelnen Bilder erzeugt werden sollen. Im vorliegenden Ausführungsbeispiel gemäß der Figur 1 ist beispielsweise der Speicher 11 einem Fotopapier mit matter Oberfläche zugeordnet. Der Speicher 15 dagegen ist einem Fotopapier mit glänzender Oberfläche zugeordnet.

Jeder der beiden Speicher 11 und 15 ist zusätzlich in drei Unterspeicher unterteilt. Der Speicher 11 enthält einen ersten Unterbereich 12, einen zweiten Unterbereich 13 und einen dritten Unterbereich 14. Der Speicher 15 enthält einen vierten Unterbereich 16, einen fünften Unterbereich 17 und einen sechsten Unterbereich 18. Den Unterbereichen 12 bis 18 der beiden Speicher 11 bis 15 sind unterschiedliche Prioritäten zugeordnet, mit denen die einzelnen Bilderzeugungsaufträge auf die einzelenen Unterbereiche 12 bis 18 verteilt werden. Das Verteilmittel 9 verteilt die Auftragstaschen, und damit die in den Auftragstaschen enthaltenen Eingabemedien, der einzelnen Bilderzeugungsaufträge entsprechend der diesen zugeordneten Priorität auf jeweils einen der Unterbereiche 12 bis 14, sofern die Bilder des jeweiligen Bilderzeugungsauftrags auf mattem Fotopapier erzeugt werden. Das Verteilmittel 9 verteilt die Auftragstaschen der einzelnen Bilderzeugungsaufträge entsprechend der diesen zugeordneten Priorität auf die Unterbereiche 16 bis 18, sofern die Bilder der einzelnen Bilderzeugungsaufträge mit Fotopapier mit glänzender Oberfläche erzeugt werden sollen. Dem ersten Unterbereich 12 des Speichers 11 und dem vierten Unterbereich 16 des Speichers 15 sind dabei die höchste Priorität 1 zugeordnet. Das heißt, die Bilderzeugungsaufträge, denen die in diesen beiden Unterbereichen 12 und 16 abgelegten Eingabemedien zugeordnet sind, erhalten eine hohe Priorität, so daß deren Bilder schnell mittels des Systems 1 erzeugt werden können. Die beiden Unterbereiche 13 und 17 erhalten eine mittlere Priorität 2, so daß die Aufträge, denen die in diesen beiden Bereichen 13 und 17 abgelegten Eingabemedien zugeordnet sind, mit normaler Priorität bearbeitet werden. Den beiden Unterbereichen 14 und 18 sind niedrige Prioritäten zur Abarbeitung von Bilderzeugungsaufträgen zugeteilt. Die in diesen Unterbereichen 14 und 18 abgelegten Eingabemedien entstammen daher Aufträgen, die mit einer niedrigen Priorität durch das System 1 abgearbeitet werden. Aufträge mit der hohen Priorität 1 werden gegenüber Aufträgen mit der normalen Priorität 2 und der niedrigen Priorität 3 bevorzugt abgearbeitet. Aufträge, denen die normale Priorität 2 zugeordnet ist, werden gegenüber Aufträgen, denen die niedrige Priorität 3 zugeordnet ist, bevorzugt abgearbeitet.

Das System 1 enthält einen Bilddatenspeicher 19, der dem Abspeichern der von dem Scanner 4 und dem Speicherkartenleser 7 ermittelten Bilddaten der einzelnen Bilder dient. Der Bilddatenspeicher 19 ist mit einem Netzwerk 20 verbunden, über das Bilddaten übertragen werden können. Das Netzwerk 20 dient ebenfalls zum Übertragen von Steuer- oder Zusatzinformationen. Das Netzwerk 20 ist mit dem Verteilmittel 9 verbunden. Das System 1 enthält ein Steuermittel 21, das ebenfalls mit dem Netzwerk 20 verbunden ist. Dieses Steuermittel 21 dient insbesondere zum Steuern der Bilddatenübertragung von dem Bilddatenspeicher 19 über das Netzwerk 20 zu einem Ausgabemittel zum Ausgeben der in den jeweiligen Bilddaten enthaltenen Bildinformationen der einzelnen Bilder auf Fotopapier. Als ein solches Ausgabemittel enthält das System 1 einen Printer 22. Dieser Printer 22 dient hier zum Belichten von Fotopapier. Der Printer 22 kann beispielsweise Laser enthalten, deren Laserstrahlen aufgrund der an den Printer 22 übertragenen Bilddaten entsprechend der in den Bilddaten enthaltenen Bildinformationen moduliert werden. Es ist aber ebenso möglich, andere Printer einzusetzen, wie z. B. Tintenstrahl-Printer, die Tinte auf dazu geeignetes Papier ausgeben. Dem Printer 22 ist ein Papierprozessor 23 nachgeordnet, der verschiedene Chemikalien enthält, die zum Entwickeln und Fixieren des Fotopapiers dienen. Das mit dem Papierprozessor 23 verarbeitete Fotopapier wird anschließend an eine Schneideeinrichtung 24 weitergeleitet, die aus dem bandförmigen Fotopapier die einzelnen Bilder herausschneidet. Solche Printer, Prozessoren und Schneideeinrichtungen sind bekannt und werden daher an dieser Stelle nicht weiter beschrieben. Die so erzeugten einzelnen Bilder werden anschließend einer Endsortierung 25 zugeleitet. Die Endsortierung 25 ist mit den beiden Speichern 11 und 15 verbunden. Die Endsortierung 25 erkennt, wenn alle Bilder eines bestimmten Auftrags fertig hergestellt sind. Die entsprechende, diesem bestimmten Auftrag zugeordnete Auftragstasche mit dem Eingabemedium wird dieser Endsortierung 25 von dem jeweiligen Speicher 11 oder 15 zugeleitet, so daß die Endsortierung 25 die fertigen Einzelbilder dieses Auftrages in die dazugehörige Auftragstasche einfügen kann.

Zur Realisierung einer effektiven und einfach aufgebauten Endsortierung 25 werden gemäß der vorliegenden Erfindung Informationen über das Verteilen der einzelnen Eingabemedien auf die beiden Speicher 11 und 15 über das Netzwerk 20 an das Steuermittel 21 weitergeleitet. Das Steuermittel 21 erhält somit von dem Verteilmittel 9 exakte Informationen über die Reihenfolge der in den Speichern 11 und 15, und deren Unterbereichen 11 bis 15 bzw. 16 bis 18, abgespeicherten Eingabemedien. Das Steuermittel 21 ist nun in der Lage, aufgrund dieser Informationen über die Verteilung der Eingabemedien die Weiterleitung von Bilddaten aus dem Bilddatenspeicher 19 über das Netzwerk 20 an den Printer 22 zu steuern. Das Steuermittel 21 wird die Bilddaten genau so an den Printer 22 weiterleiten, daß die Endsortierung 25 bei Fertigstellung der Bilder eines bestimmten Auftrages auf die nächste in dem Speicher 11 oder 15 abgespeicherte Auftragstasche, die für diesen Auftrag vorgesehen ist, zugreifen kann. Auf welchen der beiden Speicher 11 und 15 die Endsortierung 25 dabei zugreift, hängt davon ab, auf welchem Fotopapier (mit matter oder mit glänzender Oberfläche) die Bilder des zu sortierenden Auftrages von dem Printer 22 aufbelichtet wurden. Informationen über die Art des jeweiligen Fotopapiers des Auftrages können der Endsortierung 25 z. B. über ein übergeordnetes Steuermittel (nicht dargestellt) zugeleitet werden. Es ist aber ebenso möglich, daß die Endsortierung 25 diese Information von dem Steuermittel 21 erhält. Dazu kann die Endsortierung 25 ebenfalls einen Anschluß an das Netzwerk 20 haben.

Das System 1 gemäß der Figur 1 enthält neben dem Printer 22 einen weiteren Printer 26, der ebenfalls an das Netzwerk 20 angeschlossen ist. Diesem Printer 26 ist ein weiterer Papierprozessor 27 und diesem eine weitere Schneideeinrichtung 28 nachgeschaltet. Die Schneideeinrichtung 28 wiederum ist mit der Endsortierung 25 verbunden. Die Funktionsweise von Printer 26, Papierprozessor 27 und Schneideeinrichtung 28 entspricht derjenigen des Printers 22, des Papierprozessors 23 und der Schneideeinrichtung 24. Diese weitere Verarbeitungslinie, Printer 26, Prozessor 27 und Schneideeinrichtung 28, dient zur Erhöhung der Kapazität des Systems 1 bei der Erzeugung von Bildern. Das Steuermittel 21 ist so ausgestaltet, daß es ebenfalls Bilddaten aus dem Bilddatenspeicher 19 abrufen und entsprechend einer vorgegebenen Reihenfolge an den Printer 26 weiterleiten kann.

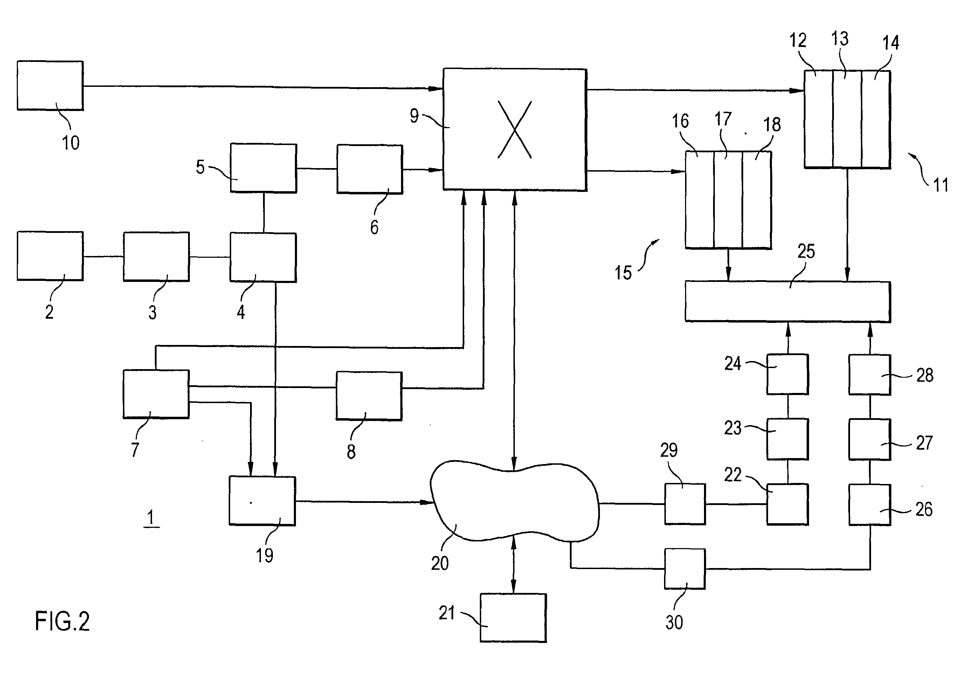

Figur 2 zeigt das zweite Ausführungsbeispiel des erfindungsgemäßen Systems zum Erzeugen von Bildern. Das System 1 gemäß der Figur 2 enthält zwischen dem Netzwerk 20 und den beiden Printern 22 und 26 jeweils einen zusätzlichen Speicher 29 bzw. 30. Diese beiden Speicher 29 und 30 dienen zum Zwischenspeichern der Bilddaten, nachdem diese von dem Steuermittel 21 aus dem Bilddatenspeicher 19 abgerufen wurden. In dem Speicher 29 werden die Bilddaten der Bilder, die mit dem Printer 22 auf Fotopapier aufbelichtet werden sollen, abgespeichert. In dem Speicher 30 werden die Bilddaten der Bilder, die mit dem Printer 26 auf Fotopapier aufbelichtet werden sollen, abgespeichert. Die beiden Speicher 29 und 30 sind als sogenannte FiFo(First-in-First-out)-Speicher ausgestaltet. Die Bilddaten der einzelnen Bilder werden daher in den Speicher 29 und 30 jeweils genau in derjenigen Reihenfolge abgespeichert, in der sie von den Printern 22 und 26 aufbelichtet werden sollen. Das Verteilen der Bilddaten von dem Speicher 19 auf die Printer 22 und 26 ist in diesem Fall besonders einfach und zeitunkritisch möglich.

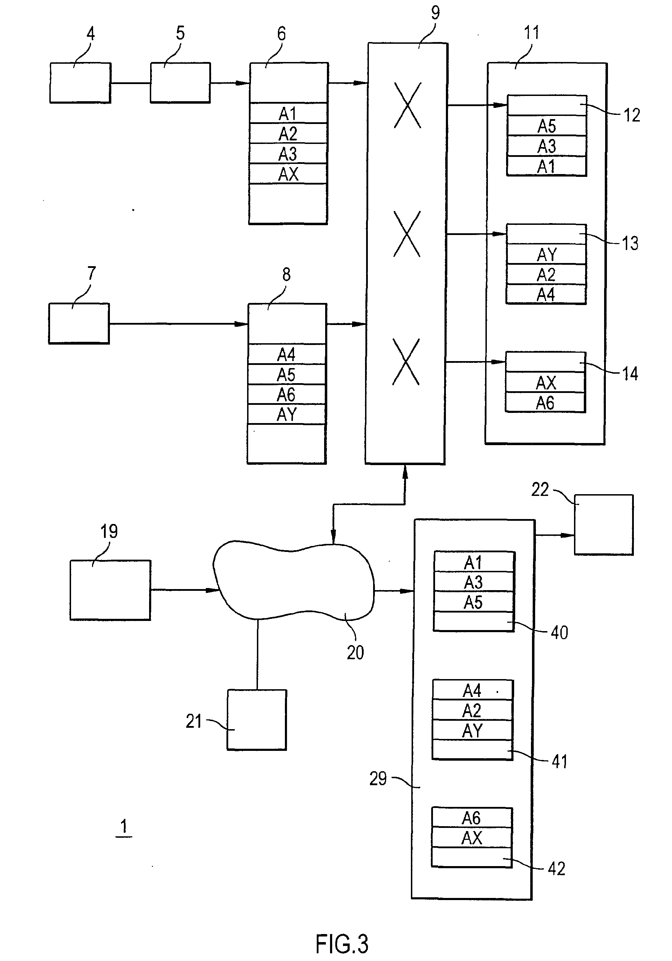

Figur 3 zeigt ein Beispiel der Verteilung mehrerer Eingabemedien, die verschiedenen Bilderzeugungsaufträgen A1 bis A6, AX und AY zugeordnet sind, auf die Unterbereiche 12 bis 14 des Speichers 11 zum Abspeichern von Eingabemedien. Des weiteren verdeutlicht Figur 3, wie die den verschiedenen Bilderzeugungsaufträgen A1 bis A6, AX und AY zugeordneten Bilddaten der Bilder dieser jeweiligen Aufträge in dem Bilddatenspeicher 29 (Figur 2) abgespeichert sind. Der Speicher 29 enthält hier einen ersten Unterbereich 40, einen zweiten Unterbereich 41 und einen dritten Unterbereich 42. Die drei Unterbereiche 40 bis 42 sind als FiFo-Speicher ausgelegt. Das bedeutet, daß die in die jeweiligen Unterbereiche eingegebenen Bilddaten der einzelnen Bilder der Aufträge in derjenigen Reihenfolge aus dem jeweiligen Unterbereich ausgegeben werden, in der sie in den Unterbereich eingegeben wurden.

Die von der Schneideeinrichtung 5 an die Verpackungsmaschine 6 weitergegebenen Filmstreifen der einzelnen Aufträge werden im vorliegenden Beispiel in der Verpackungsmaschine 6 zwischengespeichert. Eine solche Zwischenspeicherung ist vorteilhaft, da so eine Entkopplung zwischen der Verteilung der verschiedenen Auftragstaschen durch das Verteilmittel 9 und dem Schneiden der Filme mittels der Schneideeinrichtung 5 gewährleistet werden kann. Eine solche Zwischenspeicherung der Filmstreifen der verschiedenen Aufträge muß allerdings nicht notwendigerweise vorgesehen sein.

Im vorliegenden Beispiel gemäß der Figur 3 werden die Eingabemedien der verschiedenen Aufträge entsprechend der Reihenfolge ihres Einganges bei der Verpackungsmaschine 6 in den Zwischenspeicher der Verpackungsmaschine 6 zwischengespeichert. Neben dem Zwischenspeicher der Verpackungsmaschine 6 ist in der Figur 3 ebenfalls ein weiterer Zwischenspeicher dargestellt, der Bestandteil der Verpackungsmaschine 8 zum Verpacken der Speicherkarten ist.

Sowohl die mittels der Verpackungsmaschine 6 verpackten Filmstreifen als auch die mittels der Verpackungsmaschine 8 verpackten Speicherkarten werden mittels des Verteilmittels 9 auf den Speicher 11 verteilt. In den Zwischenspeicher der Verpackungsmaschine 6 sind im vorliegenden Beispiel die in Auftragstaschen verpackten Filmstreifen der Aufträge A1, A2, A3 und AX abgespeichert. Im Zwischenspeicher der Verpackungsmaschine 8 sind im vorliegenden Beispiel die in Auftragstaschen verpackten Speicherkarten der Aufträge A4, A5, A6 und AY abgespeichert. Der Zwischenspeicher der Verpackungsmaschine 8 erlaubt wie der Zwischenspeicher der Verpackungsmaschine 6 einen wahlfreien Zugriff. Funktionell stimmen beide Zwischenspeicher überein.

Der Speicher 11 enthält im vorliegenden Beispiel gemäß der Figur 3 ebenfalls die drei Unterbereiche 12 bis 14, denen die unterschiedlichen Prioritäten 1, 2 bzw. 3 zugeordnet sind. Die Figur 3 zeigt, wie die Eingabemedien der Aufträge A1 bis A6, AX und AY mittels des Verteilmittels 9 auf die Unterbereiche 12 bis 14 des Speichers 11 verteilt wurden. Dabei ist klar, daß die Eingabemedien der verschiedenen Aufträge A1 bis A6, AX und AY selbstverständlich nun nicht mehr in den Zwischenspeichern der beiden Verpackungsmaschinen 6 und 8 enthalten sein können, nachdem sie von dem Verteilmittel 9 in die Unterbereiche 12 bis 14 des Speichers 11 verteilt wurden. Aus Darstellungsgründen sind sie hier weiterhin in der Figur 3 in den Zwischenspeichem der beiden Verpackungsmaschinen 6 und 8 enthalten. Die drei Unterbereiche 12 bis 14 des Speichers 11 sind als FiFo-Speicherbereiche ausgestaltet. Im vorliegenden Beispiel wurden dem Unterbereich 12 in dieser Reihenfolge die Eingabemedien der Aufträge A1, A3 und A5 zugeordnet. Dem Unterbereich 13 wurden in dieser Reihenfolge die Eingabemedien der Aufträge A4, A2 und AY zugeordnet. Dem dritten Unterbereich 14 wurden in dieser Reihenfolge die Eingabemedien der Aufträge A6 und AX zugeordnet.

Die Reihenfolge der Verteilung auf die drei Unterbereiche 12 bis 14 wird dem Steuermittel 21 mitgeteilt. Dieses Steuermittel 21 kann entsprechend dieser Reihenfolge auf den Bilddatenspeicher 19 zugreifen, um die in diesem Bilddatenspeicher abgespeicherten Bilddaten der einzelnen Bilder der jeweiligen Aufträge A1 bis A6, AX und AY in die drei Unterbereiche 40 bis 42 des Speichers 29 weiterzuleiten. Entsprechend der Anordnung der Eingabemedien der jeweiligen Aufträge A1 bis A6, AX und AY in den Unterbereichen 12 bis 14 des Speichers 11 wurden im vorliegenden Beispiel in den ersten Unterbereich 40 in dieser Reihenfolge die Bilddaten der Bilder des Auftrages A1, A3 und A5 abgespeichert. In den zweiten Unterbereich 41 des Speichers 29 wurden dementsprechend in dieser Reihenfolge die Bilddaten der Bilder des Auftrages A4, A2 und AY abgespeichert. In den dritten Unterbereich 42 wurden in dieser Reihenfolge die Bilddaten der Bilder des Auftrags A6 und AX abgelegt. Da der Speicher 29 mit dem Printer 22 verbunden ist (Figur 2), können nun nacheinander die Bilddaten der Bilder der Aufträge A1, A3, A5, A4, A2, AY, A6 und AX an den Printer 22 weitergeleitet werden.

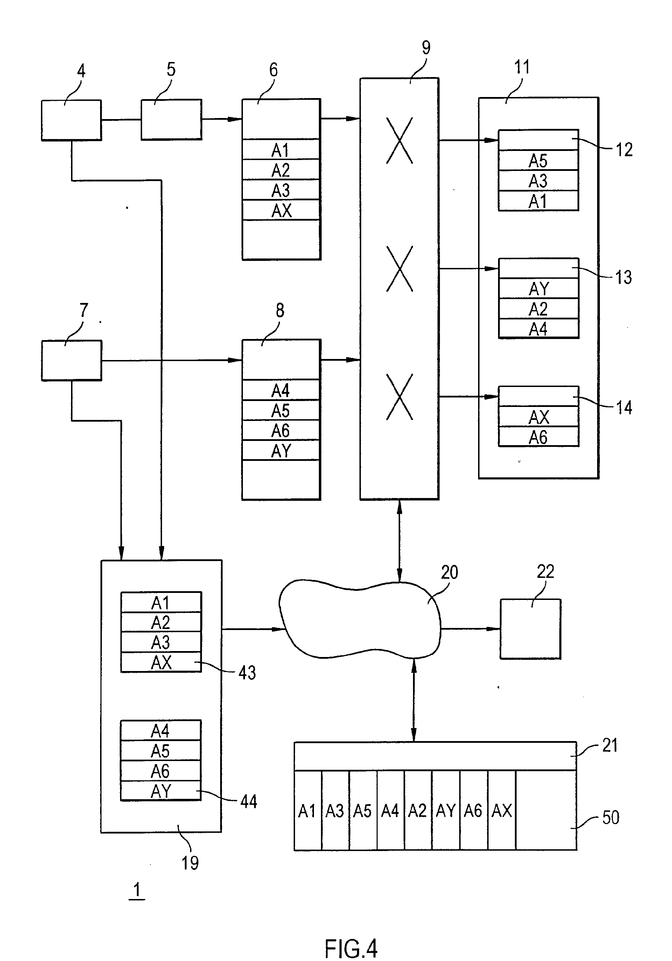

Figur 4 zeigt ein weiteres Beispiel, wie die Eingabemedien und die Bilddaten der verschiedenen Aufträge A1 bis A6, AX und AY sortiert werden können. Das Verteilen der Eingabemedien der verschiedenen Aufträge auf die Unterbereiche 12 bis 14 des Speichers 11 erfolgt im vorliegenden Beispiel gemäß der Figur 4 entsprechend dem Verteilen, wie es bereits in dem Beispiel gemäß der Figur 3 beschrieben wurde. Im Unterschied zum obigen Beispiel gemäß der Figur 3 werden die Bilddaten, die in dem Bilddatenspeicher 19 abgespeichert sind, hier allerdings nicht in den Speicher 29 weitergeleitet. Der Speicher 29 ist vielmehr bei diesem Beispiel gemäß der Figur 4 nicht notwendig.

Die Figur 4 zeigt den Bilddatenspeicher 19, in dem die Bilddaten der Aufträge A1 bis A6, AX und AY abgelegt sind. Der Bilddatenspeicher 19 ist im vorliegenden Beispiel in zwei Bereiche 43 und 44 unterteilt. In den ersten Bereich 43 werden die Bilddaten derjenigen Aufträge abgespeichert, die von dem Filmscanner 4 ermittelt und an den Speicher 19 weitergeleitet werden. In den zweiten Bereich 44 werden die Bilddaten derjenigen Bilder abgespeichert, die von dem Speicherkartenleser 7 ermittelt und an den Speicher 19 weitergeleitet werden. In dem ersten Bereich 43 sind daher die Bilddaten der Bilder der Aufträge A1, A2, A3 und AX und in dem zweiten Bereich 44 die Bilddaten der Bilder der Aufträge A4, A5, A6 und AY abgespeichert.

Das Steuermittel 41 ist im vorliegenden Beispiel so ausgestaltet, daß es einen Speicherbereich 50 enthält, in dem eine Zugriffsreihenfolge abgespeichert werden kann. In dieser Zugriffsreihenfolge ist festgelegt, in welcher Reihenfolge die Bilddaten der in dem Speicher 19 abgespeicherten Bilder der verschiedenen Aufträge über das Netz 20 an den Printer 22 weitergeleitet werden sollen. Der Speicherbereich 50 des Steuermittels 21 enthält hier entsprechend der Reihenfolge der in den verschiedenen Unterbereichen 12 bis 14 des Speichers 11 abgespeicherten Eingabemedien die Reihenfolge der an den Printer 22 weiterzuleitenden Bilddaten der Aufträge. Die in dem Speicherbereich 50 festgelegte Zugriffsreihenfolge auf die Bilddaten der Aufträge ist daher hier: A1, A3, A5, A4, A2, AY, A6 und AX. In dieser Reihenfolge greift das Steuermittel 21 auf den Speicher 19 zu und übermittelt die entsprechenden Bilddaten der Bilder des nächsten Auftrages über das Netzwerk 20 an den Printer 22. Ein Umsortieren der Bilddaten in einen Zwischenspeicher, wie beispielsweise den Speicher 29, ist nicht notwendig.

Aufgrund der vorliegenden Erfindung ist es möglich, die Reihenfolge der abzuarbeitenden Aufträge nachträglich zu ändern. Über ein übergeordnetes Steuermittel (nicht dargestellt) des Systems 1 kann beispielsweise veranlaßt werden, daß ein Eingabemedium eines bestimmten Auftrages von einem Unterbereich, z. B. Unterbereich A13, in einen anderen Unterbereich, z. B. Unterbereich A12, umsortiert wird. Dies kann dann erfolgen, wenn sich die Priorität zur Bearbeitung dieses Auftrages nachträglich ändert. Das Umsortieren des Eingabemediums wird dem Steuermittel 21 mitgeteilt. Das Steuermittel 21 veranlaßt daraufhin ein entsprechendes Umsortieren der Zugriffsreihenfolge in dem Speicherbereich 50 (Figur 4) oder ein entsprechendes Umsortieren in dem Speicher 29 (Figur 3), der dem Printer 22 vorgeschaltet ist. In diesem Fall müßte der Speicher 29 allerdings so ausgestaltet sein, daß ein derartiges Umsortieren auch nachträglich möglich ist. Auf diese Weise wird ein äußerst flexibles und einfach aufgebautes effektives System zum Erzeugen von Bildern geschaffen.

## Patentansprüche

1. Vorrichtung (1) zum Erzeugen von Bildern mit
- einem Lesemittel (2, 7) zum Lesen von auf Eingabemedien enthaltenen Bildinformationen mehrerer Bilder (A1 bis A6, AX, AY) und zum Bestimmen von Bilddaten, die die gelesenen Bildinformationen enthalten, wobei die Eingabemedien mehreren Bilderzeugungsaufträgen zugeordnet sind, und
- einem Ausgabemittel (22, 26) zum Ausgeben von Bildinformationen auf Aufzeichnungsmaterial entsprechend an das Ausgabemittel (22, 26) übermittelter Bilddaten, die die auszugebenden Bildinformationen enthalten,
**dadurch gekennzeichnet, daß** die Vorrichtung (1)
- ein Sortiermittel (9) zum auftragsweisen Sortieren der gelesenen Eingabemedien nach wenigstens einem vorgegebenen Kriterium und
- ein Steuermittel (21) zum Bestimmen einer Reihenfolge zum Übermitteln der jeweiligen Bilddaten von Bildern (A1 bis A6, AX, AY) an das Ausgabemittel (22, 26) in Abhängigkeit von dem auftragsweisen Sortieren der gelesenen Eingabemedien aufweist.

2. Vorrichtung nach Anspruch 1, **dadurch gekennzeichnet, daß** sie einen Speicher (19; 29, 30) zum Speichern von Bilddaten mit den Bildinformationen der Bilder (A1 bis A6, AX, AY) der Aufträge aufweist und das Steuermittel (21) so ausgestaltet ist, daß es ein aufeinanderfolgendes Speichern der jeweiligen Bilddaten von Bildern (A1 bis A6, AX, AY) entsprechend der bestimmten Reihenfolge in dem Speicher (19; 29, 30) steuert.

3. Vorrichtung nach Anspruch 1 **dadurch gekennzeichnet, daß** sie einen Speicher (19) zum Speichern von Bilddaten mit den Bildinformationen der Bilder (A1 bis A6, AX, AY) der Aufträge aufweist und das Steuermittel (21) so ausgestaltet ist, daß es entsprechend der bestimmten Reihenfolge auf in dem Speicher (19) gespeicherte Bilddaten der Bilder (A1 bis A6, AX, AY) zugreift.

4. Vorrichtung nach einem der vorhergehenden Ansprüche, **dadurch gekennzeichnet, daß** ein Speicher (11, 15) zum Speichern der Eingabemedien der mehreren Bilderzeugungsaufträge entsprechend dem auftragsweisen Sortieren vorhanden ist.

5. Vorrichtung nach Anspruch 4, **dadurch gekennzeichnet, daß** der Speicher (11, 15) zum Speichern der Eingabemedien ein sogenannter First-in-First-Out-Speicher ist.

6. Vorrichtung nach Anspruch 4 oder Anspruch 5, **dadurch gekennzeichnet, daß** mehrere Speicher (11, 15) zum Speichern der Eingabemedien der mehreren Bilderzeugungsaufträge entsprechend dem auftragsweisen Sortieren vorhanden sind.

7. Vorrichtung nach Anspruch 6, **dadurch gekennzeichnet, daß** einem einzigen Ausgabemittel (22) mehrere der Speicher (11, 15) zum Speichern der Eingabemedien zugeordnet sind.

8. Vorrichtung nach Anspruch 6 oder Anspruch 7, **dadurch gekennzeichnet, daß** das Steuermittel (21) das Speichern der Eingabemedien in den mehreren Speichern (11, 15) zum Speichern der Eingabemedien steuert und die mehreren Speicher (11, 15) unterschiedlichen Aufzeichnungsmaterialien zugeordnet sind, auf die mit demselben Ausgabemittel (22) Bildinformationen ausgebbar sind.

9. Vorrichtung nach einem der Ansprüche 6 bis 8, **dadurch gekennzeichnet, daß** das Steuermittel (21) das Speichern der Eingabemedien in den mehreren Speichern (11, 15) zum Speichern der Eingabemedien steuert und den mehreren Speichern (11, 15) unterschiedliche Prioritäten zum Erzeugen von Bildern zugeordnet sind.

10. Verfahren zum Erzeugen von Bildern, bei dem
- auf Eingabemedien enthaltene Bildinformationen mehrerer Bilder (A1 bis A6, AX, AY)gelesen und Bilddaten bestimmt werden, die die gelesenen Bildinformationen enthalten, wobei die Eingabemedien mehreren Bilderzeugungsaufträgen zugeordnet sind, und
- Bildinformationen auf Aufzeichnungsmaterial entsprechend übermittelter Bilddaten ausgegeben werden,
**dadurch gekennzeichnet, daß**
- die gelesenen Eingabemedien nach wenigstens einem Kriterium auftragsweise sortiert werden und
- eine Reihenfolge zum Übermitteln der jeweiligen Bilddaten von Bildern (A1 bis A6, AX, AY) zum Ausgeben von Bildinformationen auf Aufzeichnungsmaterial in Abhängigkeit von dem auftragsweisen Sortieren der gelesenen Eingabemedien bestimmt wird.
